(19)

Europäisches
Patentamt
European
Patent Office
Office européen
des brevets

(11) **EP 2 670 140 A1**

(12) **EUROPEAN PATENT APPLICATION**

(43) Date of publication:
**04.12.2013 Bulletin 2013/49**

(51) Int Cl.:
***H04N 7/26*** (2006.01)

(21) Application number: **12305619.4**

(22) Date of filing: **01.06.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent**
**75007 Paris (FR)**

(72) Inventors:
• **Stevens, Christoph**
**9190 Stekene (BE)**

• **Rondao Alface, Patrice**
**1400 Nivelles (BE)**
• **Van Broeck, Sigurd**
**2980 Zoersel (BE)**
• **Macq, Jean-François**
**1083 Ganshoren (BE)**

(74) Representative: **D'Halleweyn, Nele Veerle Trees**
**Gertrudis et al**
**Arnold & Siedsma**
**Sweelinckplein 1**
**2517 GK Den Haag (NL)**

(54) **Method and apparatus for encoding a video stream**

(57) A method for encoding a video stream divided in macroblocks using an encoding scheme, the video stream comprising a transparency level channel, said method comprising:
- classifying said macroblocks into inner macroblocks, for which a transparency value provided by said transparency information channel is substantially uniform, and transition macroblocks, for which a transparency value provided by said transparency level channel is not substantially uniform;
- determining a statistic of said transparency value for each one of said inner macroblocks; and
- configuring a respective parameter of said encoding scheme for each one of said inner macroblocks in function of its respective statistic.

## Figure 1

EP 2 670 140 A1

## Description

### Field of the Invention

The present invention relates to the field of video coding, and in particular to the field of coding video streams with transparency information.

### Background

Transparency channels are increasingly being used in many applications in order to fuse different live video seeds into a single video stream.

At present, there is no way to efficiently take into account transparency information in carrying out the coding for the YUV/RGB channels and possible depth information.

### Summary

It is therefore an object of embodiments of the present invention to exploit the available transparency information for improving the encoding mechanism, in particular to reduce the output video rates and/or computational complexity.

According to an aspect of the invention, there is provided a method for encoding a video stream divided in macroblocks using an encoding scheme, the video stream comprising a transparency level channel, the method comprising: classifying the macroblocks into inner macroblocks, for which a transparency value provided by the transparency information channel is substantially uniform, and transition  macroblocks, for which a transparency value provided by the transparency level channel is not substantially uniform; determining a statistic of the transparency value for each one of the inner macroblocks; and configuring a respective parameter of the encoding scheme for each one of the inner macroblocks in function of its respective statistic.

Throughout the present application, the term "macroblock" is used to designate a coding unit of an encoding scheme. Although the term "macroblock" is defined in the H.264 recommendation and typically associated with encoding in accordance with that recommendation, the term shall be understood to include the equivalent coding units used in other encoding schemes.

It is an advantage of the method according to the present invention that the video stream (i.e., the YUV/RGB channels and possible depth information) is being encoded in a manner that takes into account the opacity/transparency of the content on a macroblock-per-macroblock basis. Accordingly, macroblocks that preponderantly contain transparent content (as determined from the average, median, or other relevant statistic of the transparency values for that macroblock) may be encoded with a more efficient, and less qualitative set of parameters. These parameters are configured as "encoding hints", according to the known practice for codecs such as H.264 and HEVC. It is a further advantage of the method according to the present invention that it distinguishes between macroblocks that may be treated as uniform, as far as their transparency is concerned, which can generally be encoded more efficiently than macroblocks in which (sharp) transitions of the opacity level occur.

In an embodiment of the method according to the present invention, the statistic is an average transparency level or a median transparency level, and the configuring of the parameter comprises: determining if the statistic exceeds a predetermined value; and if the determining is positive, configuring the parameter of the encoding scheme for each one of the inner macroblocks to reduce encoding complexity.

It is an advantage of this embodiment that a relatively simple threshold-base assessment is used to determine whether to reduce encoding complexity for a particular inner macroblock. The "transparency level" is a parameter that expresses the degree of transparency of the pixels in a macroblock, such that a high "transparency level" is understood to mean highly transparent content. This expression is not intended to exclude implementations where the transparency is in fact coded by an "opacity level" (e.g., an "alpha" parameter), in which a low "opacity level" is used to designate highly transparent content; in such cases, a low "opacity level" corresponds to a high "transparency level".

In an embodiment of the method according to the present invention, the configuring of the parameter comprises disabling at least one of a deblocking filter and an adaptive loop filter.

In a particular embodiment, the macroblocks are grouped into slices representing horizontally partitioned portions of a frame, the method further comprising disabling the at least one of the deblocking filter and the adaptive filter for each slice that comprises a transition macroblock.

These embodiments are based on the insight of the inventors that artifacts such as blocking artifacts in substantially transparent portions of a video stream are not significantly disturbing. Hence, these embodiments improve the encoding efficiency by selectively disabling the deblocking filter and/or adaptive loop filter.

In an embodiment of the method according to the present invention, the configuring of the parameter comprises setting the intra prediction to the $16 \times 16$ DC mode.

This embodiment is based on the insight of the inventors that coarse interpolation in substantially transparent portions of a video stream does not significantly degrade the overall image. Hence, this embodiment improves the encoding efficiency by selectively setting the interpolation engine to a coarser mode.

In an embodiment of the method according to the present invention, the configuring of the parameter comprises switching a motion estimation mode to P_SKIP mode.

This embodiment is based on the insight of the inventors that coarse motion estimation in substantially transparent portions of a video stream does not significantly degrade the overall image. Hence, this embodiment improves the encoding efficiency by selectively disabling the motion estimation.

In a particular embodiment, the method further comprises for each transition block: partitioning the transition block into sub blocks, the partitioning being carried out so as to minimize the number of sub blocks that include a transparency level transition.

This embodiment takes into account the occurrence of transitions in the transparency information. It is an advantage of this embodiment that a balance is struck between accurately representing the transition, which may be sharp, and efficiently encoding the underlying color (and optionally depth) information. The sub blocks that, as a result of the applied partitioning, do not include a transparency level transition may thence be treated as "inner sub blocks", and undergo the treatment described hereinabove with respect to "inner blocks".

In an embodiment of the method according to the present invention, the configuring of the parameter comprises configuring an amount of compression to be applied to each inner macroblock as a function of the statistic, such that more transparent macroblocks undergo more compression.

In a particular embodiment, the method further comprises: determining a statistic of the transparency value for each one of the transition macroblocks; and configuring an amount of compression to be applied to each transition macroblock as a function of the statistic, such that more transparent macroblocks undergo more compression.

It is an advantage of these embodiments that the encoding of the video stream (i.e., the YUV/RGB channels and possible depth information) is being performed with an adaptive compression rate in a manner that takes into account the opacity/transparency of the content on a macroblock-per-macroblock basis. Accordingly, macroblocks that preponderantly contain transparent content will be encoded with more compression (e.g., a higher QP value), and thus lower quality. These parameters are configured as "encoding hints", according to the known practice for codecs such as H. 264 and HEVC.

According to an aspect of the invention, there is provided a computer program comprising software means for carrying out the method as described above.

According to an aspect of the invention, there is provided an apparatus for encoding a video stream divided in macroblocks, the video stream comprising a transparency level channel, the apparatus comprising: a video encoder configured to encode the video stream according to an encoding scheme; a classification engine for classifying the macroblocks into inner macroblocks, for which a transparency value provided by the transparency information channel is substantially uniform, and transition macroblocks, for which a transparency value provided by the transparency level channel is not substantially uniform; a processor for calculating a statistic of the transparency value for each one of the inner macroblocks; and an encoding hint generator adapted to configure a parameter of the video encoder for each one of the inner macroblocks in function of its respective statistic.

In an embodiment of the apparatus according to the present invention, the statistic is an average transparency level or a median transparency level, and wherein the encoding hint generator is further adapted to: determine if the statistic exceeds a predetermined value; and if the determining is positive, configure the parameter of the video encoder for each one of the inner macroblocks to reduce encoding complexity.

In an embodiment of the apparatus according to the present invention, the configuring of the parameter comprises configuring an amount of compression to be applied to each inner macroblock as a function of the statistic, such that more transparent macroblocks undergo more compression.

In a particular embodiment, the processor is further adapted to determine a statistic of the transparency value for each one of the transition macroblocks; and the encoding hint generator is further adapted to configure an amount of compression to be applied to each transition macroblock as a function of the statistic, such that more transparent macroblocks undergo more compression.

The technical effects and advantages of the computer program and the apparatus in accordance with embodiments of the present invention correspond, *mutatis mutandis,* to those existing in connection with the corresponding embodiments of the method according to the present invention.

**Brief Description of the Figures**

Some embodiments of apparatus and/or methods in accordance with embodiments of the present invention are now described, by way of example only, and with reference to the accompanying drawings, in which:

Figure 1 provides a flow chart of an embodiment of the method according to the present invention; and
Figure 2 provides a schematic diagram of an embodiment of the apparatus according to the present invention.

**Description of Embodiments**

Embodiments of the present invention are *inter alia* based on the insight of the inventors that portions of the video streams that are intended to remain transparent may be reproduced with reduced quality without noticeably degrading the overall quality of the final (fused) video stream.

Embodiments of the present invention are further based on the insight of the inventors that the reduced need for quality of these portions may advantageously be taken into account during the encoding step, to reduce the coding complexity and/or bit rate of the video stream.

Certain choices made at the encoder side to improve the encoding efficiency in accordance with embodiments of the present invention, also lead to a reduction in the complexity of the decoding process.

Although embodiments of the invention are hereinafter described in the context of H.264 and HEVC encoders, this is done for clarifying purposes only, and not intended to limit the scope of the invention. The skilled person will understand that the principles of the invention also apply to different types of block-based encoders that allow for the inclusion of transparency information. Also, the term "alpha channel" (denoted as $\alpha$ in formulae) is used as a representative example of a "transparency information channel", without intent to limit the invention to codecs in which the transparency information is specifically provided under the name or form of an actual "alpha channel".

Throughout the description, reference will be made to "substantially transparent" pixels, blocks, macroblocks, or slices. It will be appreciated by the skilled person that the principles of the present invention apply regardless of the exact threshold that one chooses to apply to determine whether a pixel is "substantially transparent". In the context of the invention, it is possible to consider only completely transparent pixels as substantially transparent. It is also possible to consider pixels with an opacity less than (or equal to) 50%, or even less than (or equal to) 25%, as substantially transparent. It also possible to apply a different threshold, which may be below or above 50% opacity. Also, different thresholds may be applied to different stages of the invention.

To illustrate aspects of the invention, and without intent to limit its scope, the following mathematical formalism may be introduced to discuss the available transparency information. Further details on the formalism are provided in an application entitled **"Method and apparatus for encoding a video stream having a transparency information channel"** in the name of the applicant, filed with application no. EP 12 305 617.8 on the same day as the present application, the content of which is incorporated in its entirety by this reference.

The alpha image is mathematically considered in terms of segmented regions with a support domain and an implicit function

$$F(x, y, z) = F(i, j, \alpha) = 0$$

The mathematical representation is defined as the composition of implicit functions. These functions denoted $F(x,y,z)$ are defined in the 3D space with $(x,y,z)$ coordinates where the pair $(x,y)$ is equal to the $(i,j)$ pixel coordinates of the alpha pixels and the $z$ coordinate is the alpha value at $(i,j)$. The function F might for example be a sphere of radius $r$, such as

$$F(x, y, z) = x^2 + y^2 + z^2 - r^2 = 0$$

The functions $F$ are generalized polynomials in $(x,y,z)$ that are totally defined by their coefficients $a_{m,n,p}$, such that

$$F(x, y, z) = \sum_{m,n,p} a_{m,n,p} x^m y^n z^p$$

The functions *F* can also be defined on a support domain described by a rectangular region in (*x,y*) coordinates.

Composition of functions (e.g., a half sphere in the middle of a plane) is defined by functions with their respective support domains, with the specific rule that if an (*x,y*) pair receives two possible alpha values, only the highest alpha value will be associated with that (*x,y*) pair (erring on the side of opacity).

The advantage of such a representation is that it allows accurate representation of smooth transitions of alpha shapes or depth values. Furthermore, in case of scaling or re-sampling of the image, the alpha channel can be recomputed without any loss in quality.

"Information priors" or "hints" from the alpha channel are used to simplify the encoding of the YUV/RGB channels. Among the functional blocks of the AVC or HEVC encoder that can be simplified or speeded up thanks to information priors coming from the alpha channel, there are:

- Intra prediction directions and partitioning if geometric shapes are available on the alpha channel;
- Inter prediction partitioning and motion information (such as Search Area) if objects can be derived from the alpha channel;
- Loop filter parameters if shapes are available in the alpha channel;
- Rate control parameters.

Any one or more of these functional blocks may be used in accordance with the present invention.

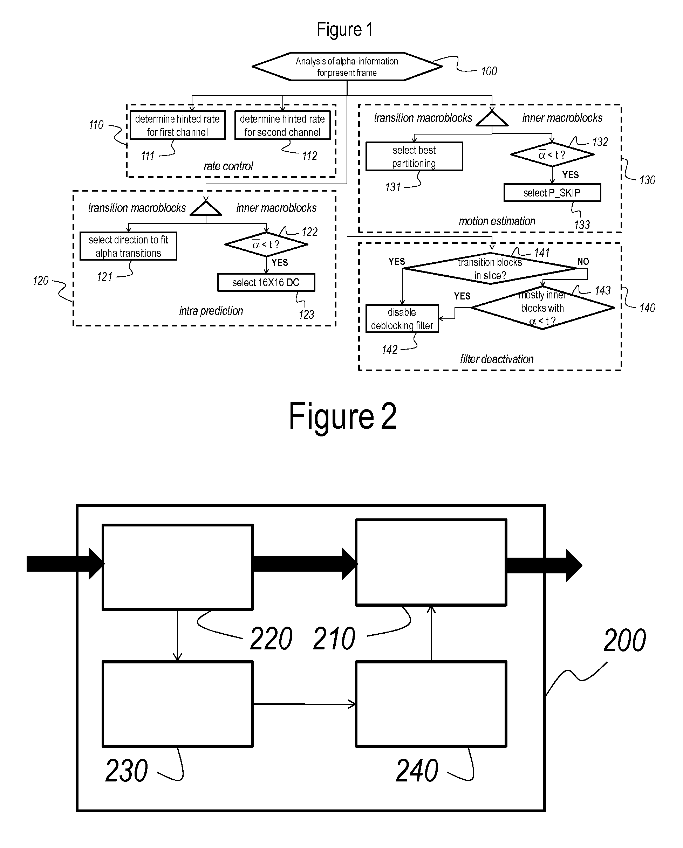

A first embodiment will now be described with reference to Figure 1.

According to the present invention, an advantageous distinction is made **100** between macroblocks with a substantially uniform transparency level, hereinafter known as "inner macroblocks", and macroblocks with a non-uniform transparency level, hereinafter known as "transition macroblocks".

Although an embodiment of the method according to the invention is described hereinafter in which analysis and decisions are assumed to be based on a single frame (the "present frame"), it shall be appreciated by the skilled person that it may generally be advantageous to include information obtained from one or more previous frame in the analysis. Accordingly, if it is determined that the transparency information has not changed much from the previous frame(s) to the present frame, the previously established distinction between inner macroblocks and transition macroblocks may at least partially be reused to improve the efficiency of the method.

By means of example, the method is applied to an H.264 encoder, having two YUV channels as input and one alpha channel containing transparency values that can represent a segmentation of the content or be defined by an application (e.g., a picture-in-picture application). Where appropriate, modifications relevant to HEVC encoders will be mentioned. For clarity reasons, the various channels are not separately shown in Figure 1.

The encoding process is guided on a macroblock-by-macroblock basis in such a way that compression may be increased (hence, bit rate and quality level reduced) for macroblocks that are substantially transparent. This rate control **110** is preferably accomplished as follows:

- For an inner macroblock, the *QP* parameter is adapted (incremented) based on a function $t(\alpha, QP)$, where $\alpha$ is the *average* of the alpha values on that macroblock and *QP* is the initial *QP* chosen by the encoder for this macroblock, with the following limit conditions:

    o for a low value of $\alpha$ (substantially transparent pixels), *QP* shall be maximal (lowest visually acceptable quality),
    o for a high value of $\alpha$ (substantially opaque pixels) *QP* shall not be modified.

- For a transition macroblock, QP is modified by the *median* of the alpha values on the macroblock in the same way as for inner macroblocks. The advantage of the media value on the average value is that it will favor the most representative (in terms of number of pixels) region of the macroblock and consider it as representative of the whole macroblock.

While the use of the average alpha value (for inner macroblocks) and median alpha value (for transition macroblocks) is particularly advantageous and computationally simple, other statistics may also be used.

Rate Control **110** may be accomplished in particular as follows. If $R_1$ is the total rate per picture for the first YUV channel ($R_1$ being different for I, P or B frames), each macroblock $m_1$ of that YUV channel with corresponding transparency $\alpha_1$ will get a hinted rate **111** as a function of $\alpha_1$ and $R_1$. Advantageously, the hinted rate is set to $\alpha_1 \times R_1/ M_1$, where $M_1$ is equal to the number of macroblocks in a frame of that YUV channel. In the same way, the macroblock $m_2$ from the other YUV channel having a transparency $\alpha_2 = (1-\alpha_1)$ receives a hinted rate **112** as a function of $\alpha_2$ and $R_1$, which is advantageously $(1-\alpha_1) * R_2/M_2$, where $R_2$ is the rate per picture of the second YUV channel and $M_2$ is the number of macroblocks in the second YUV channel.

In embodiments of the invention, intra prediction directions of the YUV encoded streams are determined **120** in accordance with the edges of shapes defined in the alpha channel, and hinted as priority directions for effective compression. This provides the advantage of decreasing encoding and decoding computational complexity and improving visual quality.

Preferably, if the macroblock is a transition macroblock, the intra prediction mode direction will be selected **121** to optimally fit the alpha transition(s) on that macroblock. Preferably, if the macroblock is an inner macroblock and the average alpha value is lower than a threshold $t(\alpha,QP)$, **122,** a low complexity mode such as the 16x16 DC mode is selected **123.**

In embodiments of the invention, motion estimation information such as search area, motion partition and motion direction are hinted **130** if moving objects are delineated by the alpha channel shapes. This allows a reduction of the computational complexity of the motion estimation part of the encoding and decoding, in particular the H.264 encoding and decoding, by avoiding unnecessary motion vector signaling for (substantially) transparent pixels.

Preferably, if the macroblock is a transition macroblock, the partitioning that best represents that transition is hinted to the encoder **131**. This "best" partitioning is the partitioning in which the number of sub blocks intersected by the region borders is minimal. Preferably, if the macroblock is an inner macroblock, and its average alpha value is lower than a threshold $t(\alpha,QP)$, **132,** a low complexity mode such as the P_SKIP mode shall be selected **133.**

The deblocking filter of H.264 or the adaptive loop filter of HEVC may be turned on or off for given macroblock edges, in function of the presence of shape edges in the alpha channel **140**. Turning off the filter reduces encoding and decoding computational complexity. The decision is preferably made on a slice-by-slice basis, whereby a "slice" is a horizontal grouping of contiguous macroblocks.

Preferably, if the majority of macroblocks of the slice are inner macroblocks with an alpha value below a predetermined threshold $t(\alpha)$ (*i.e.*, substantially transparent macroblocks) **143,** the deblocking filter is disabled for that slice **142**. Preferably, if there are transition macroblocks in a slice **141,** the deblocking filter shall be disabled for that slice **142**. In other cases, the encoding hint pertaining to the filter may be omitted.

If a depth channel is present as an additional input, the rate of depth quantization may further be adapted according to the transparency value, wherein more transparent regions require less fine quantization of the depth channel. Preferably, the coding rate of the two YUV channel macroblocks is then adapted according to a function of both transparency and depth of interest, such as:

$$\alpha_1 \times f(depth_1) \times \frac{R_1}{M_1}$$

where $f(depth_1)$ is a function representing the desired quality for a given depth.

Motion estimation may also be hinted based on depth values by limiting the search area to the corresponding alpha-consistent and depth-consistent regions, *i.e.*, regions in which the variance of alpha values as well as the variance of depth values will be low.

In Template Matching-based video coding, which may be used as an alternative to H.264 and HEVC, the hinting may be limited to the search of correlations in the region of the current frame that has already been encoded and reconstructed (motion estimation inside the already encoded region of the current frame; that is the regions that are up and left of the current processed image block). According to any embodiment of the invention, the search area is limited by the shapes and values of the alpha channel, *i.e.* by contiguous non-transparent shapes.

Figure 2 illustrates an apparatus **200** for encoding a video stream divided in macroblocks, which includes a transparency level channel. For clarity purposes, the input and output interfaces are not shown in detail. The video streams (before and after encoding) are illustrated in a simplified way as bold arrows. The information exchanged between the various blocks of the apparatus **200** (including macroblock classification information, calculated statistics, and encoding hints) are shown as line arrows. The apparatus **200** comprises a video encoder **210,** which is configured to encode the video stream according to an encoding scheme, such as H.264 or HEVC. The apparatus **200** further comprises a classification engine **220** for classifying the macroblocks of the video stream into inner macroblocks and transition macroblocks, according to whether a transparency value provided by the transparency information channel is substantially uniform or not. The apparatus **200** further comprises a processor **230,** operatively coupled to the classification engine **220,** for calculating a statistic of the transparency value for each one of the inner macroblocks. An encoding hint generator **240,** operatively coupled to the processor **230** and the video encoder **210,** is provided and adapted to configure a parameter of the video encoder **210** for each one of the inner macroblocks in function of its respective statistic.

Preferably, the statistic is an average transparency level or a median transparency level, and the encoding hint generator **240** is further adapted to determine if the statistic exceeds a predetermined value. If this is the case (i.e., the determining yields a positive result), the parameter of the video encoder **210** is configured for each such inner macroblock to reduce encoding complexity.

The configuring of the parameter may comprise configuring an amount of compression (*e.g.*, the QP parameter) to be applied to each inner macroblock as a function of the statistic, such that more transparent macroblocks undergo more compression.

The processor **230** may be further adapted to determine a statistic of the transparency value for each one of the transition macroblocks. The corresponding encoding hint generator **240** is then adapted to configure an amount of compression to be applied to each transition macroblock as a function of the statistic, such that more transparent macroblocks undergo more compression.

Although methods and apparatus have been described hereinabove as separate embodiments, this is done for clarity purposes only, and it should be noted that features described only in connection with method embodiments may be applied in the apparatus according to the present invention to obtain the same technical effects and advantages, and vice versa.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

**Claims**

1. A method for encoding a video stream divided in macroblocks using an encoding scheme, the video stream comprising a transparency level channel, said method comprising:

    - classifying said macroblocks into inner macroblocks, for which a transparency value provided by said transparency information channel is substantially uniform, and transition macroblocks, for which a transparency value provided by said transparency level channel is not substantially uniform;
    - determining a statistic of said transparency value for each one of said inner macroblocks; and
    - configuring a respective parameter of said encoding scheme for each one of said inner macroblocks in function of its respective statistic.

2. The method according to claim 1, wherein said statistic is an average transparency level or a median transparency level, and wherein said configuring of said parameter comprises:

    - determining if said statistic exceeds a predetermined value; and
    - if said determining is positive, configuring said parameter of said encoding scheme for each one of said inner macroblocks to reduce encoding complexity.

3. The method according to claim 2, wherein said configuring of said parameter comprises disabling at least one of a deblocking filter and an adaptive loop filter.

4. The method according to claim 3, wherein said macroblocks are grouped into slices representing horizontally partitioned portions of a frame, the method further comprising disabling said at least one of said deblocking filter and said adaptive loop filter for each slice that comprises a transition macroblock.

**5.** The method according to claim 2, wherein said configuring of said parameter comprises setting the intra prediction to the $16 \times 16$ DC mode.

**6.** The method according to claim 2, wherein said configuring of said parameter comprises switching a motion estimation mode to P_SKIP mode.

**7.** The method according to claim 6, further comprising for each transition block:

- partitioning said transition block into sub blocks, said partitioning being carried out so as to minimize the number of sub blocks that include a transparency level transition.

**8.** The method according to any of the preceding claims, wherein said configuring of said parameter comprises: configuring an amount of compression to be applied to each inner macroblock as a function of said statistic, such that more transparent macroblocks undergo more compression.

**9.** The method according to claim 8, further comprising:

- determining a statistic of said transparency value for each one of said transition macroblocks; and
- configuring an amount of compression to be applied to each transition macroblock as a function of said statistic, such that more transparent macroblocks undergo more compression.

**10.** A computer program comprising software means for carrying out the method of any of the preceding claims.

**11.** An apparatus for encoding a video stream divided in macroblocks, the video stream comprising a transparency level channel, said apparatus comprising:

- a video encoder configured to encode said video stream according to an encoding scheme;
- a classification engine for classifying said macroblocks into inner macroblocks, for which a transparency value provided by said transparency information channel is substantially uniform, and transition macroblocks, for which a transparency value provided by said transparency level channel is not substantially uniform;
- a processor for calculating a statistic of said transparency value for each one of said inner macroblocks; and
- an encoding hint generator adapted to configure a parameter of said video encoder for each one of said inner macroblocks in function of its respective statistic.

**12.** The apparatus according to claim 11, wherein said statistic is an average transparency level or a median transparency level, and wherein said encoding hint generator is further adapted to:

- determine if said statistic exceeds a predetermined value; and
- if said determining is positive, configure said parameter of said video encoder for each one of said inner macroblocks to reduce encoding complexity.

**13.** The apparatus according to any of claims 11-12, wherein said configuring of said parameter comprises configuring an amount of compression to be applied to each inner macroblock as a function of said statistic, such that more transparent macroblocks undergo more compression.

**14.** The apparatus according to claim 13, wherein said processor is further adapted to determine a statistic of said transparency value for each one of said transition macroblocks; and wherein said encoding hint generator is further adapted to configure an amount of compression to be applied to each transition macroblock as a function of said statistic, such that more transparent macroblocks undergo more compression.

## Figure 1

Analysis of alpha-information
for present frame — *100*

**rate control** — *110*

| determine hinted rate for first channel — *111* | determine hinted rate for second channel — *112* |

**motion estimation** — *130*

transition macroblocks     inner macroblocks

select best partitioning — *131*

$\overline{\alpha} < t$ ? — *132*

YES

select P_SKIP — *133*

**intra prediction** — *120*

transition macroblocks     inner macroblocks

select direction to fit alpha transitions — *121*

$\overline{\alpha} < t$ ? — *122*

YES

select 16X16 DC — *123*

**filter deactivation** — *140*

transition blocks in slice? — *141*

YES                    NO

mostly inner blocks with $\alpha < t$ ? — *143*

YES

disable deblocking filter — *142*

## Figure 2

Europäisches
Patentamt

European
Patent Office

Office européen
des brevets

# EUROPEAN SEARCH REPORT

Application Number

EP 12 30 5619

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | EP 1 571 850 A2 (SAMSUNG ELECTRONICS CO LTD [KR]) 7 September 2005 (2005-09-07)<br>* figure 3 *<br>* paragraph [0036] - paragraph [0044] * | 1,8-11,<br>13,14<br>2-7,12 | INV.<br>H04N7/26 |
| X<br><br>A | EP 1 624 675 A1 (MICROSOFT CORP [US]) 8 February 2006 (2006-02-08)<br>* figures 6A-6C *<br>* paragraph [0014] *<br>* paragraph [0067] - paragraph [0081] * | 1,8-11,<br>13,14<br>2-7,12 | |
| Y | EP 0 843 481 A1 (MATSUSHITA ELECTRIC IND CO LTD [JP]) 20 May 1998 (1998-05-20)<br>* figure 8 *<br>* page 11, line 29 - page 11, line 58 * | 2-7,12 | |
| A | NOEL BRADY: "MPEG-4 Standardized Methods for the Compression of Arbitrarily Shaped Video Objects",<br>IEEE TRANSACTIONS ON CIRCUITS AND SYSTEMS FOR VIDEO TECHNOLOGY, IEEE SERVICE CENTER, PISCATAWAY, NJ, US,<br>vol. 9, no. 8,<br>1 December 1999 (1999-12-01), XP011014632,<br>ISSN: 1051-8215<br>* the whole document * | 1-14 | TECHNICAL FIELDS SEARCHED (IPC)<br><br>H04N |
| A | PORTER T ET AL: "COMPOSITING DIGITAL IMAGES",<br>COMPUTER GRAPHICS, ACM, US,<br>vol. 18, no. 3, 1 July 1984 (1984-07-01),<br>pages 253-259, XP000609391,<br>ISSN: 0097-8930, DOI:<br>10.1145/964965.808606<br>* the whole document * | 1-14 | |

The present search report has been drawn up for all claims

| Place of search | Date of completion of the search | Examiner |
|---|---|---|
| The Hague | 9 August 2012 | Stoufs, Maryse |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.** EP 12 30 5619

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2012

| Patent document cited in search report | | Publication date | Patent family member(s) | | Publication date |
|---|---|---|---|---|---|
| EP 1571850 | A2 | 07-09-2005 | EP 1571850 A2 | | 07-09-2005 |
| | | | JP 4955216 B2 | | 20-06-2012 |
| | | | JP 2005253088 A | | 15-09-2005 |
| | | | US 2005196062 A1 | | 08-09-2005 |
| EP 1624675 | A1 | 08-02-2006 | EP 1624675 A1 | | 08-02-2006 |
| | | | JP 4878451 B2 | | 15-02-2012 |
| | | | JP 2006067571 A | | 09-03-2006 |
| | | | US 2006029134 A1 | | 09-02-2006 |
| | | | US 2006031915 A1 | | 09-02-2006 |
| | | | US 2006031917 A1 | | 09-02-2006 |
| | | | US 2012114037 A1 | | 10-05-2012 |
| EP 0843481 | A1 | 20-05-1998 | AU 6630196 A | | 05-03-1997 |
| | | | CN 1195449 A | | 07-10-1998 |
| | | | EP 0843481 A1 | | 20-05-1998 |
| | | | JP 9051504 A | | 18-02-1997 |
| | | | WO 9706641 A1 | | 20-02-1997 |

EPO FORM P0459

For more details about this annex : see Official Journal of the European Patent Office, No. 12/82

**REFERENCES CITED IN THE DESCRIPTION**

**Patent documents cited in the description**

- EP 12305617 A